# EUROPEAN PATENT SPECIFICATION

(11) **EP 4 652 426 B1**
(45) Date of publication and mention of the grant of the patent: **25.11.2026**
(21) Application number: 24701076.2
(22) Date of filing: 15.01.2024
(51) Int. Cl.: F42D 5/04, B25J 11/00, B63C 11/34, B63G 7/00, F42B 33/06, B25J 21/00

(54) **DEVICE FOR REMOVING AMMUNITION FROM THE BOTTOM OF A WATER BODY AND METHOD APPLIED THEREBY**
VORRICHTUNG ZUM ENTFERNEN VON MUNITION VOM BODEN EINES WASSERKÖRPERS UND VERFAHREN DAFÜR
DISPOSITIF POUR RETIRER UNE MUNITION DEPUIS LE FOND D'UN CORPS D'EAU ET PROCÉDÉ APPLIQUÉ PAR CELUI-CI

(30) Priority: 18.01.2023 BE 202305025
(43) Date of publication of application: 26.11.2025
(73) Proprietor: Van Rompay, Boudewijn Gabriël, Clearwater, Florida 33756 (US)
(72) Inventor: Van Rompay, Boudewijn Gabriël, Clearwater, Florida 33756 (US)
(74) Representative: Oryon NV
(86) International application number: PCT/IB2024/050378
(87) International publication number: WO 2024/154038

(56) References cited:
- EP-B1- 3 479 052
- DE-A1- 102018 119 339

## Description

The present invention relates to a device and a method applied thereby for removing ammunition from the bottom of a water body.

In particular, the device and the method are intended for cleaning up ammunition under water in a safe way with as little impact as possible on human health and the environment.

Water body relates, among others, to seas and oceans, rivers or other waterways, coastlines, lakes, marshes, pools, ponds, canals and the like.

Munition or ammunition is understood to mean all possible projectiles and their propelling charges, for example shells, grenades, bullets, bombs, mines, torpedoes, underwater weapons, explosives, charges, missiles, and the like.

Said ammunition may have accidentally ended up on the bottom of the water body or purposefully in so-called ammunition dumps. Unused ammunition is collected in such ammunition dumps, for example shells or poison gas or mustard gas grenades, usually from one of the two World Wars.

Apart from the fact that ammunition does not belong on the bottom of water bodies, rusting ammunition housing may cause the (often) toxic content to leak into the water and/or atmosphere. In addition, the ammunition is subject to decline such that the content is slowly but surely released and mixes with the water.

Ammunition often contains gunpowder and explosives in the form of 2,4,6-trinitrotoluene, better known by the abbreviation TNT. TNT is known to be genotoxic. This means that TNT changes the DNA of fish or other living organisms that come into contact with it. Gunpowder on the other hand often contains the extremely toxic white phosphorus, the decomposition products of which also damage the environment.

There is also still an explosion hazard. Ammunition dumps are often located near sandbanks where a vessel could run aground and may cause the dumped ammunition to explode. Anchoring vessels, fishing or dredging may also cause the ammunition in such ammunition dumps to explode.

Such explosions not only damage the immediate vicinity of the explosion, but may also cause tidal waves at coastlines, for example.

Ammunition on the bottom of a water body consequently forms a danger for people, animals and the environment.

A possibility that is sometimes applied is elevating such ammunition dumps with sand such that an artificial island is created. However, this does nothing to remedy the problem of the leaking ammunition, nor is this possible in some water bodies where shipping traffic must remain possible, for example. EP 3 479 052 A1 and DE 10 2018 119339 A1 disclose devices for removing ammunition from the bottom of a water body.

The purpose of the present invention is to provide a solution to at least one of the aforementioned and other disadvantages.

To this end, the invention as defined by claim 1 relates to a device for removing ammunition from the bottom of a water body whereby the device comprises an inner bell consisting of a chamber that is open at the underside and closed at the top by means of a roof and surrounded by a closed wall, whereby the chamber is positioned all the way down on the bottom or at a distance from the bottom, whereby the device is further provided with means to eject the water from the chamber, whereby a gripper arm is provided in the chamber for picking up the ammunition and depositing the ammunition in a reservoir provided to this end, whereby the inner bell is provided with one or more overpressure valves or the like and whereby the device is provided with a bigger outer bell that is mounted over the inner bell, whereby the outer bell is provided with one or more overpressure valves or the like and whereby the overpressure valves of the outer bell are connected to a discharge pipe.

The advantage of a device according to the invention is that ammunition on the bottom of a water body can be salvaged and cleared in a very simple manner and without danger for human health and the environment.

The ammunition can be collected and removed, after which it can be made harmless or dismantled in a controlled environment. The toxic or hazardous components can then be taken out and removed.

Using the device according to the invention entire ammunition dumps can be safely cleared.

The use of an outer bell over the inner bell ensures that in the possible event of an explosion of the ammunition in the inner bell the gasses that manage to escape between the bottom and the surrounding closed wall of the chamber due to the blast wave of the explosion are captured in the outer bell.

The purpose of the one or more overpressure valves in the chamber of the inner bell and in the outer bell is that in the possible event of an explosion of the ammunition, said overpressure valves open under the influence of the pressure build-up in the chamber and outer bell and that consequently the released gasses are discharged via the opened overpressure valves via the discharge pipe.

The discharge pipe can be passive or actively extract the gasses.

Despite the fact that collecting the ammunition with the gripper arm is done in an extremely controlled and precise way, the device, using the overpressure valves, the discharge pipe and the outer bell over the inner bell is equipped to ensure that no (hazardous) gasses can be released into the atmosphere or mix or dissolve in the water in case of an accidental explosion of the ammunition or in case of damage to the housing of the ammunition.

As the water is ejected from the inner bell, the visibility in the inner bell is considerably improved.

Preferably, the aforementioned distance between the lower edge of the surrounding closed wall of the chamber and the bottom is between zero and one metre and ideally is between forty and sixty centimetres.

Such distance ensures a compromise between good visibility in the water and sufficient distance between the lower edge of the chamber and the ammunition to be removed. It is indeed important to handle or move the ammunition as little as possible to not cause any unwanted explosions of the ammunition.

Preferably, the aforementioned means to eject the water from the chamber are formed by means to bring compressed air into the chamber. The pressure of the compressed air that is pumped or driven into the chamber will push or eject the water from the inner bell.

Preferably, the device is mounted on a floating crane, drilling platform or workboat from where the outer bell and the inner bell can be lowered all the way down on the bottom or at a distance from the bottom of the water body. In this way the device can be moved quickly and easily over the water body.

Preferably, the aforementioned discharge pipe on the floating crane, drilling platform or workboat is connected to a container or the like which is intended for capturing gasses from the ammunition. Said gasses can then be processed or made harmless in a controlled environment.

In a preferred embodiment, the inner bell is provided with one or more cameras. In this way the ammunition, the movements of the gripper arm and the reservoir can be remotely monitored or controlled.

Indeed, preferably the gripper arm is remotely operated, for example from the floating crane or drilling platform. Said operation can be wired or wireless.

The invention also relates to a method for removing ammunition from the bottom of a water body using a device whereby the method comprises the following steps:
A) lowering the outer bell and the inner bell all the way down on the bottom or at a distance from the bottom of the water body;
B) ejecting the water from the inner bell;
C) collecting the ammunition present on the bottom with the gripper arm;
D) depositing the ammunition in the reservoir;
E) repeating the previous two steps until all ammunition is collected in the reservoir.

After step E, the method can be followed by a step F:
F) moving the outer bell and the inner bell.

After step E or step F, the method can be followed by a step G:
G) raising the outer bell and the inner bell to the floating crane or drilling platform.

In a preferred embodiment the method is preceded by a step in which the device is directed to a point where ammunition is located on the bottom of the water body.

With the intention of better showing the characteristics of the invention, a preferred embodiment of a device and method for removing ammunition from the bottom of a water body according to the invention is described hereinafter, by way of an example without any limiting nature, with reference to the accompanying drawings wherein:

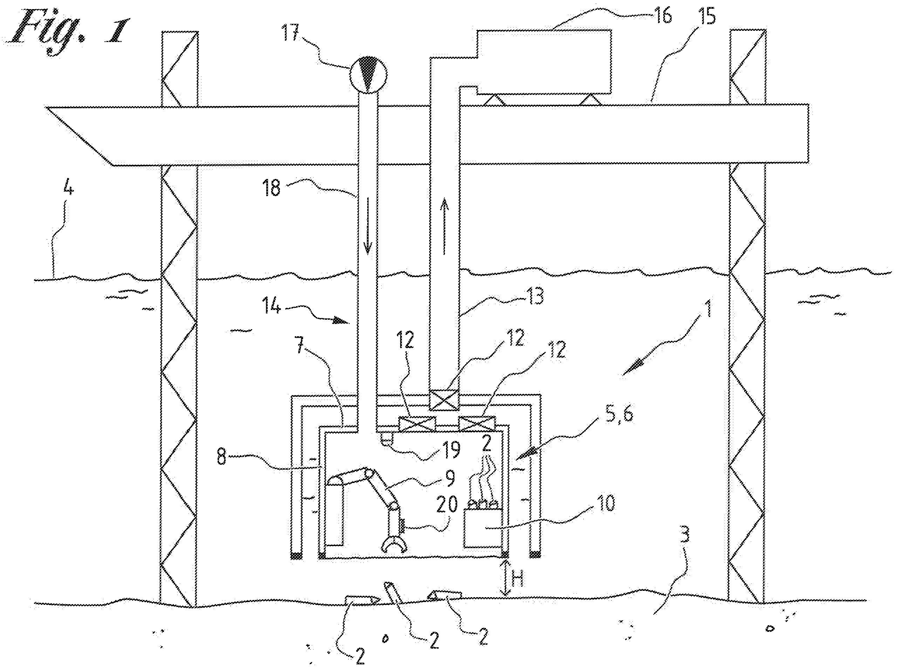

figure 1 schematically shows a vertical cross-section of a device according to the invention.

The device shown in figure 1 for removing ammunition 2 from the bottom 3 of a water body 4 comprises an inner bell 5 which consists of a chamber 6 that is open at the underside and closed at the top by means of a roof 7 and surrounded by a closed wall 8.

The inner bell 5 is positioned at a distance H from the bottom 3. In this case, said distance H equals fifty centimetres. In practice, said distance H may vary between zero and one metre, but preferably said distance H is between forty and sixty centimetres.

In the case of this example three projectiles of ammunition 2 are present on the bottom 3. It goes without saying that the number of projectiles as shown here is arbitrary.

The surrounding closed wall 8 of the inner bell 5 is provided with a gripper arm 9, robot arm or other kind of gripper for gripping and moving the ammunition 2 to a reservoir provided to this end 10. The ammunition 2 to be salvaged is collected in said reservoir 10.

In this case, said gripper arm 9 and the reservoir 10 are provided against the surrounding closed wall 8 of the chamber 6, but alternatively may also be mounted on or suspended from the roof 7.

The device is provided with an outer bell 11 that is mounted over the inner bell 5. The aforementioned distance H between the lower edge of the inner bell 5 and the bottom 3 equals the distance between a lower edge of the outer bell 11 and the bottom 3.

The chamber 6 of the inner bell 5 and the outer bell 11 are provided with overpressure valves 12 which open in case of a gas accumulation or accidental explosion of the ammunition 2. The device 1 is intrinsically safe in case ammunition 2 were to explode unexpectedly.

The overpressure valve 12 of the outer bell 11 is connected to a discharge pipe 13 for discharging the gasses coming from the ammunition 2 in the case of a gas accumulation or explosion.

Said overpressure valves 12 may also be membrane valves or the like which open at a certain overpressure in the inner bell 5 and/or outer bell 11.

Although in this example the overpressure valves 12 are provided in the roof 7 of the chamber 6 and on the upperside of the outer bell 11, alternatively said overpressure valves 12 may also be located in the sidewalls or the surrounding closed wall 8.

The device 1 is further provided with means 14 to eject the water from the chamber 6. This means that in an operational condition of the device 1, the internal volume of the chamber 6 is chiefly filled with air and that the internal volume of the outer bell 11 is chiefly filled with water.

In this example, the device 1 is coupled or mounted to a floating crane 15. The outer bell 11 and inner bell 5 can be lowered and raised from the floating crane 15. Alternatively, the floating crane 15 can also be a drilling platform or workboat, for example.

The discharge pipe 13 which is connected to the aforementioned overpressure valve 12 of the outer bell 11 in this example is connected or coupled to a container 16 that is located on the floating crane 11.

Said container 16 will safely capture any released gasses coming from the ammunition 2. Any released gasses flow according to the direction of the arrow in figure 1, from the outer bell to the container 16 on the floating crane 15.

In this example, the means 14 to eject the water from the chamber 6 of the inner bell 5 relate to a compressed air installation 17 located on the floating crane 15.

Compressed air flows from the compressed air installation 17 on the floating crane 15 via a compressed air pipe 18 to the internal volume of the chamber 6 in the direction of the arrow shown in figure 1.

In this way the compressed air ejects the water in the chamber 6. The air in the chamber 6 increases the visibility in the chamber 6.

In this example the device 1 is provided with a camera 19 with which the ammunition 2, the actions of the gripper arm 9 and the reservoir 10 can be monitored. The pictures coming from this camera 19 can be followed on the floating crane 15 for example.

In this way it is possible to remotely operate the gripper arm 9. This operation can be wireless or wired.

In this case, the gripper arm 9 is equipped with a detector 20 for detecting, finding or locating ammunition 2. Said detector 20 is a magnetoscopic or metal detector, for example.

Alternatively, such detector 20 can also be located elsewhere in the device 1.

The operation of the device 1 is very simple and comprises the following steps:
A) lowering the outer bell 11 and the inner bell 5 down to the bottom 3 or at a distance H from the bottom 3 of the water body 4;
B) ejecting the water from the inner bell 5;
C) collecting the ammunition 2 present on the bottom 3 with the gripper arm 9;
D) depositing the ammunition 2 in the reservoir 10;
E) repeating the previous two steps until all ammunition 2 is collected in the reservoir 10.

The method can be followed by one of the following additional steps:
F) moving the outer bell 11 and the inner bell 5.
G) raising the outer bell 11 and the inner bell 5 to the floating crane 15, drilling platform or workboat.

The method can also be preceded by an additional step in which the device 1 is directed to a point where ammunition 2 is located on the bottom 3 of the water body 4.

Although the example described by way of an example shows three overpressure valves 12, the invention is not limited to this. The number of overpressure valves 12 may deviate from this.

Alternatively, the overpressure valves 12 of the inner bell 5 may also be provided with a discharge pipe 13 that leads to the container 16 on the floating crane 15 or drilling platform.

The present invention is by no means limited to the embodiments described as an example and shown in the figures, but defined by the appended claims.

## Claims

1. Device for removing ammunition (2) from the bottom (3) of a water body (4) whereby the device (1) comprises an inner bell (5) consisting of a chamber (6) that is open at the underside and closed at the top by means of a roof (7) and surrounded by a closed wall (8), whereby the chamber (6) is positioned all the way down on the bottom (3) or at a distance H from the bottom (3), whereby the device (1) is further provided with means (14) to eject the water from the chamber (6), whereby a gripper arm (9) is provided in the chamber (6) for picking up the ammunition (2) and depositing the ammunition (2) in a reservoir (10) provided to this end, whereby the inner bell (5) is provided with one or more overpressure valves (12) or the like and whereby the device (1) is provided with a bigger outer bell (11) that is mounted over the inner bell (5), whereby the outer bell (11) is provided with one or more overpressure valves (12) and whereby the overpressure valves (12) of the outer bell (11) are connected to a discharge pipe (13).

2. Device according to claim 1, **characterised in that** the aforementioned distance H between the chamber (6) and the ammunition (2) on the bottom (3) to be removed is between zero and one metre, preferably between forty and sixty centimetres.

3. Device according to any one of the previous claims, **characterised in that** the aforementioned means (14) to eject the water from the chamber (6) is formed by means (14) to bring compressed air into the chamber (6).

4. Device according to any one of the previous claims, **characterised in that** the device (1) is provided with a floating crane (15), drilling platform or workboat from where the outer bell (11) and the inner bell (5) can be lowered into the water body (4).

5. Device according to claim 4, **characterised in that** the discharge pipe (13) is connected to the floating crane (15), drilling platform or workboat.

6. Device according to any one of the previous claims 4 or 5, **characterised in that** the aforementioned discharge pipe (13) on the floating crane (15), drilling platform or workboat is connected to a container (16) for collecting gasses coming from the ammunition (2).

7. Device according to any one of the previous claims, **characterised in that** the inner bell (5) is provided with one or more cameras (19).

8. Device according to any one of the previous claims, **characterised in that** the device (1) is provided with one or more detectors (20) for detecting or locating ammunition (2).

9. Device according to any one of the previous claims, **characterised in that** the gripper arm (9) is operated remotely, in a wired or wireless way.

10. Device according to any one of the previous claims, **characterised in that** the aforementioned overpressure valves (12) of the chamber (6) are provided in the roof (7) of the chamber (6).

11. Method for removing ammunition (2) from the bottom(3) of a water body (4) using a device (1) according to any one of the previous claims **characterised in that** the method comprises the following steps:
A) lowering the outer bell (11) and the inner bell (5) all the way down on the bottom (3) or at a distance H from the bottom (3) of the water body (4);
B) ejecting the water from the inner bell (5);
C) collecting the ammunition (2) present on the bottom (3) with the gripper arm (9);
D) depositing the ammunition (2) in the reservoir (10);
E) repeating the previous two steps until all ammunition (2) is collected in the reservoir (10).

12. Method according to claim 11, **characterised in that** the method after step E comprises the following step:
F) moving the outer bell (11) and the inner bell (5).

13. Method according to claim 11 or 12, **characterised in that** the method after step E or step F comprises the following step:
G) raising the outer bell (11) and the inner bell (5) to the floating crane (15), drilling platform or workboat.

14. Method according to any one of the previous claims 11 to 13, **characterised in that** the method is preceded by a step in which the floating crane (15), drilling platform or workboat are directed to a point where ammunition (2) is located on the bottom (3) of the water body (4).

## Patentansprüche

1. Vorrichtung zum Entfernen von Munition (2) vom Grund (3) einer Wassermasse (4), wobei die Vorrichtung (1) eine innere Glocke (5) umfasst, die aus einer Kammer (6) besteht, die an der Unterseite offen und oben anhand eines Dachs (7) geschlossen und von einer geschlossenen Wand (8) umgeben ist, wobei die Kammer (6) ganz unten auf dem Grund (3) oder in einem Abstand H von dem Grund (3) positioniert ist, wobei die Vorrichtung (1) ferner mit Mitteln (14) versehen ist, um das Wasser aus der Kammer (6) auszustoßen, wobei ein Greifarm (9) in der Kammer (6) bereitgestellt wird, um die Munition (2) aufzuheben und die Munition (2) in einem Reservoir (10), das zu diesem Zweck bereitgestellt wird, abzulegen, wobei die innere Glocke (5) mit einem oder mehreren Überdruckventilen (12) oder dergleichen versehen ist, und wobei die Vorrichtung (1) mit einer größeren äußeren Glocke (11) versehen ist, die über der inneren Glocke (5) montiert ist, wobei die äußere Glocke (11) mit einer oder mehreren Überdruckventilen (12) versehen ist, und wobei die Überdruckventile (12) der äußeren Glocke (11) mit einem Auslassrohr (13) verbunden sind.

2. Vorrichtung nach Anspruch 1, **dadurch gekennzeichnet, dass** der vorgenannte Abstand H zwischen der Kammer (6) und der zu entfernenden Munition (2) auf dem Grund (3) zwischen null und einem Meter, bevorzugt zwischen vierzig und sechzig Zentimeter, beträgt.

3. Vorrichtung nach einem der vorhergehenden Ansprüche, **dadurch gekennzeichnet, dass** die vorgenannten Mittel (14) zum Ausstoßen des Wassers aus der Kammer (6) aus Mitteln (14) zum Bringen von Druckluft in die Kammer (6) bestehen.

4. Vorrichtung nach einem der vorhergehenden Ansprüche, **dadurch gekennzeichnet, dass** die Vorrichtung (1) mit einem Schwimmkran (15), einer Bohrplattform oder einem Arbeitsboot versehen ist, von dem bzw. der aus die äußere Glocke (11) und die innere Glocke (5) in die Wassermasse (4) abgesenkt werden können.

5. Vorrichtung nach Anspruch 4, **dadurch gekennzeichnet, dass** das Auslassrohr (13) mit dem Schwimmkran (15), der Bohrplattform oder dem Arbeitsboot verbunden ist.

6. Vorrichtung nach einem der vorhergehenden Ansprüche 4 oder 5, **dadurch gekennzeichnet, dass** das vorgenannte Auslassrohr (13) auf dem Schwimmkran (15), der Bohrplattform oder dem Arbeitsboot mit einem Behälter (16) zum Sammeln von Gasen, die aus der Munition (2) stammen, verbunden ist.

7. Vorrichtung nach einem der vorhergehenden Ansprüche, **dadurch gekennzeichnet, dass** die innere Glocke (5) mit einer oder mehreren Kameras (19) versehen ist.

8. Vorrichtung nach einem der vorhergehenden Ansprüche, **dadurch gekennzeichnet, dass** die Vorrichtung (1) mit einem oder mehreren Detektoren (20) zum Detektieren oder Auffinden von Munition (2) versehen ist.

9. Vorrichtung nach einem der vorhergehenden Ansprüche, **dadurch gekennzeichnet, dass** der Greifarm (9) drahtgebunden oder drahtlos fernbedient wird.

10. Vorrichtung nach einem der vorhergehenden Ansprüche, **dadurch gekennzeichnet, dass** die vorgenannten Überdruckventile (12) der Kammer (6) in dem Dach (7) der Kammer (6) bereitgestellt werden.

11. Verfahren zum Entfernen von Munition (2) vom Grund (3) einer Wassermasse (4) unter Verwendung einer Vorrichtung (1) nach einem der vorhergehenden Ansprüche, **dadurch gekennzeichnet, dass** das Verfahren die folgenden Schritte umfasst:
A) Absenken der äußeren Glocke (11) und der inneren Glocke (5) ganz nach unten auf den Grund (3) oder in einem Abstand H von dem Grund (3) der Wassermasse (4);
B) Ausstoßen des Wassers aus der inneren Glocke (5);
C) Sammeln der Munition (2), die auf dem Grund (3) vorhanden ist, mit dem Greifarm (9);
D) Ablegen der Munition (2) in das Reservoir (10);
E) Wiederholen der vorhergehenden beiden Schritte, bis die ganze Munition (2) in dem Reservoir (10) gesammelt ist.

12. Verfahren nach Anspruch 11, **dadurch gekennzeichnet, dass** das Verfahren nach Schritt E den folgenden Schritt umfasst:
F) Verschieben der äußeren Glocke (11) und der inneren Glocke (5).

13. Verfahren nach Anspruch 11 oder 12, **dadurch gekennzeichnet, dass** das Verfahren nach Schritt E oder Schritt F den folgenden Schritt umfasst:
G) Hochheben der äußeren Glocke (11) und der inneren Glocke (5) bis zu dem Schwimmkran (15), der Bohrplattform oder dem Arbeitsboot.

14. Verfahren nach einem der vorhergehenden Ansprüche 11 bis 13, **dadurch gekennzeichnet, dass** dem Verfahren ein Schritt vorausgeht, bei dem der Schwimmkran (15), die Bohrplattform oder das Arbeitsboot auf einen Punkt gerichtet wird, an dem sich Munition (2) auf dem Grund (3) der Wassermasse (4) befindet.

## Revendications

1. Dispositif pour retirer des munitions (2) du fond (3) d'un plan d'eau (4), dans lequel le dispositif (1) comprend une cloche intérieure (5) constituée d'une chambre (6) qui est ouverte du côté inférieur et fermée en partie supérieure au moyen d'un toit (7) et entourée par une paroi fermée (8), de sorte que la chambre (6) est positionnée tout en bas sur le fond (3) ou à une distance H du fond (3), de sorte que le dispositif (1) est en outre pourvu de moyens (14) pour expulser l'eau de la chambre (6), de sorte qu'un bras préhenseur (9) est prévu dans la chambre (6) pour saisir les munitions (2) et déposer les munitions dans un réservoir (10) prévu à cet effet, de sorte que la cloche intérieure (5) est pourvue d'une ou de plusieurs soupapes de surpression (12) ou analogues et de sorte que le dispositif (1) est pourvu d'une cloche extérieure (11) plus grande qui est montée sur la cloche intérieure (5), de sorte que la cloche extérieure (11) est pourvue d'une ou de plusieurs soupapes de surpression (12) et de sorte que les soupapes de surpression (12) de la cloche extérieure (11) sont reliées à un tuyau d'évacuation (13).

2. Dispositif selon la revendication 1, **caractérisé en ce que** la distance H précédemment mentionnée entre la chambre (6) et les munitions (2) à retirer situées sur le fond (3) est comprise entre zéro et un mètre, de préférence entre quarante et soixante centimètres.

3. Dispositif selon l'une quelconque des revendications précédentes, **caractérisé en ce que** les moyens précédemment mentionnés (14) pour expulser l'eau de la chambre (6) sont formés par des moyens (14) pour amener de l'air comprimé dans la chambre (6).

4. Dispositif selon l'une quelconque des revendications précédentes, **caractérisé en ce que** le dispositif (1) est pourvu d'une grue flottante (15), d'une plateforme de forage ou d'un bateau de travail à partir desquels la cloche extérieure (11) et la cloche intérieure (5) peuvent être descendues dans le plan d'eau (4).

5. Dispositif selon la revendication 4, **caractérisé en ce que** le tuyau d'évacuation (13) est relié à la grue flottante (15), à la plateforme de forage ou au bateau de travail.

6. Dispositif selon l'une quelconque des revendications 4 ou 5 précédentes, **caractérisé en ce que** le tuyau d'évacuation précédemment mentionné (13) situé sur la grue flottante (15), la plateforme de forage ou le bateau de travail est relié à un conteneur (16) pour collecter les gaz provenant des munitions (2).

7. Dispositif selon l'une quelconque des revendications précédentes, **caractérisé en ce que** la cloche intérieure (5) est pourvue d'un ou de plusieurs appareils de prise de vues (19).

8. Dispositif selon l'une quelconque des revendications précédentes, **caractérisé en ce que** le dispositif (1) est pourvu d'un ou de plusieurs détecteurs (20) pour détecter ou localiser des munitions (2).

9. Dispositif selon l'une quelconque des revendications précédentes, **caractérisé en ce que** le bras préhenseur (9) est mis en œuvre à distance, de manière filaire ou sans fil.

10. Dispositif selon l'une quelconque des revendications précédentes, **caractérisé en ce que** les soupapes de surpression précédemment mentionnées (12) de la chambre (6) sont prévues dans le toit (7) de la chambre (6).

11. Procédé pour retirer des munitions (2) du fond (3) d'un plan d'eau (4) à l'aide d'un dispositif (1) selon l'une quelconque des revendications précédentes, **caractérisé en ce que** le procédé comprend les étapes suivantes :
A) descendre la cloche extérieure (11) et la cloche intérieure (5) tout en bas sur le fond (3) ou à une distance H du fond (3) du plan d'eau (4) ;
B) expulser l'eau de la cloche intérieure (5) ;
C) collecter les munitions (2) présentes sur le fond (3) avec le bras préhenseur (9) ;
D) déposer les munitions (2) dans le réservoir (10) ;
E) répéter les deux étapes précédentes jusqu'à ce que toutes les munitions (2) soient collectées dans le réservoir (10).

12. Procédé selon la revendication 11, **caractérisé en ce que** le procédé comprend, après l'étape E, l'étape suivante :
F) déplacer la cloche extérieure (11) et la cloche intérieure (5).

13. Procédé selon la revendication 11 ou 12, **caractérisé en ce que** le procédé comprend, après l'étape E ou l'étape F, l'étape suivante :
G) remonter la cloche extérieure (11) et la cloche intérieure (5) jusqu'à la grue flottante (15), la plateforme de forage ou le bateau de travail.

14. Procédé selon l'une quelconque des revendications 11 à 13 précédentes, **caractérisé en ce que** le procédé est précédé d'une étape dans laquelle la grue flottante (15), la plateforme de forage ou le bateau de travail sont dirigés vers un point où des munitions (2) sont situées sur le fond (3) du plan d'eau (4).
